Europäisches Patentamt

European Patent Office

Office européen des brevets

(11) Veröffentlichungsnummer: **0 303 263**
**A1**

(12) **EUROPÄISCHE PATENTANMELDUNG**

(21) Anmeldenummer: 88113039.7

(51) Int. Cl.⁴: **B60R 1/08**

(22) Anmeldetag: **11.08.88**

(30) Priorität: **13.08.87 DE 3727033**

(43) Veröffentlichungstag der Anmeldung:
**15.02.89 Patentblatt 89/07**

(84) Benannte Vertragsstaaten:
**ES GR**

(71) Anmelder: **Brinckmann, Frank**
**Kielortallee 2**
**D-2000 Hamburg 13(DE)**

(72) Erfinder: **Kühn, Willi**
**Wiesenweg 20**
**D-2122 Bleckede - Walmsburg(DE)**

(74) Vertreter: **Glaeser, Joachim, Dipl.-Ing. et al**
**Patentanwalt Königstrasse 28**
**D-2000 Hamburg 50(DE)**

(54) Vorrichtung zum Verschwenken eines Kraftfahrzeugspiegels aus einer Normalstellung in eine Abblendstellung.

(57) Vorrichtung zum Verschwenken eines Spiegels in oder an einem Kraftfahrzeug aus der Normalstellung (vollreflektierender Zustand T) in eine Abblendstellung (teilreflektierender Zustand T) bei übermäßigem Blendlicht (B) durch die Scheinwerfer eines nachfolgenden Fahrzeuges und unter Berücksichtigung von störendem Umlicht (U), aufweisend eine Spannungsquelle, einen Motor (M), dessen Welle (10) über einen Kippmechanismus auf den Spiegel einwirkt und der über Thyristoren (T1, T2) gespeist ist, die ihrerseits über Transistoren (TR1,TR2, TR3) mit Hilfe von Photodioden bzw. -widerstände (B, U) für Blendlicht und störendes Umlicht gesteuert sind. Ein bipolarer Drehschalter (DS) ist zum Motor (M) in Reihe geschaltet, der den Stromfluß durch den Motor nach einem bestimmten Drehwinkelschritt seiner Welle unterbricht, den zuvor leitenden Thyristor (T1 bzw. T2) von der Spannungsquelle abtrennt und ihn abschaltet. Der Kippmechanismus weist auf: eine vom Motor angetriebene Kurbelscheibe (11) mit einem Kurbelzapfen (12) und einen vermittels des Kurbelzapfens hin- und herbewegbaren Lenker (13), der mit dem Spiegel verbunden und mit einer im wesentlichen ellipsenförmigen den Kurbelzapfen umgebenden Öffnung (14) ausgebildet ist, deren Bereiche (15) größerer Radialerstreckung dem Schaltbereich des Drehschalters (DS) und deren Bereiche (16) kleinerer Radialerstreckung der Normal- und der Abblendstellung (V, T) des Spiegels zugeordnet sind.

Fig.1

## Vorrichtung zum Verschwenken eines Kraftfahrzeugspiegels aus einer Normalstellung in eine Abblendstellung

Die Erfindung bezieht sich auf eine Vorrichtung zum Verschwenken eines Kraftfahrzeugspiegels aus der Normalstellung (vollreflektiernender Zustand V) in eine Abblendstellung (teilreflektierender Zustand T) bei übermäßigem Blendlicht (B) durch die Scheinwerfer eines folgenden Fahrzeuges und unter Berücksichtigung von störendem Umlicht (U), aufweisend eine Spannungsquelle, einen Motor (M), dessen Welle (10) über einen Kippmechanismus auf den Spiegel einwirkt und der über Thyristoren (T1 und T2) gespeist ist, die ihrerseits über Transistoren (TR1, TR2 und TR3) mit Hilfe von Photodioden bzw. -widerstände (B und U) für Blendlicht und störendes Umlicht gesteuert sind.

Es sind selbsttätig verstellbare Innenrückblickspiegel für Kraftfahrzeuge bekannt (DE-OS 34 37 775). Bei dem bekannten Innenrückblickspiegel wird ein in einem Gehäuse untergebrachtes Spiegelglas aus einer Normalstellung mit hoher Reflexion in eine Abblendstellung mit verringerter Reflexion mittels eines Elektromotors verschwenkt. Seine Antriebswelle ist über ein Getriebe mit dem Spiegelglas verbunden. Das Getriebe ist ein Schneckengetriebe, durch das die Antriebswelle mit einer Schaltnocken tragenden Welle antriebsverbunden ist. Sie ist mit mindestens einem Excenterteil verbunden, der im Gehäuse in einer quer zur Achse der Welle sich erstreckenden Führung verschiebbar geführt ist. Um den Einfluß störenden Umlichts zu erfassen, ist eine elektrische Brückenschaltung vorgesehen, die über einen Vergleich der (elektrischen) Blendlicht- und Umlichtsignale und einen Verstärker den Motor speist. Weder die elektronische Schaltung noch der Antriebsmechsnismus erfüllen die derzeitigen Forderungen an Schwenkvorrichtungen für Kraftfahrzeugspiegel, da die elektronische Schaltung lediglich auf das Lichtverhältnis Blendlicht zu Umlicht anspricht und weil viele mechanische Teile beschleunigt und abgebremst werden müssen, um den Spiegel zu verstellen, wobei nicht einmal erreicht werden kann, daß der Spiegel präzise in seine Endstellungen gebracht wird, was u.a. auch auf die Nachlaufeigenschaften des Motors und des Getriebes, aber auch auf das Langloch zurückzuführen ist, über welches die Drehbewegung in eine Kippbewegung umgewandelt wird. Darüberhinaus ist die elektronische Schaltung äußerst kompliziert und teuer.

Der Erfindung liegt die Aufgabe zugrunde, eine Vorrichtung der eingangs genannten Art so auszugestalten, daß deren elektronische Schaltung auf die absoluten Größen des Lichteinfalls (Blendlicht, Umlicht) anspricht und deren Mechanismus nur aus wenigen und relativ kleinen mechanischen Teilen zum Verschwenken des Spiegels besteht.

Diese Aufgabe wird mit einer Vorrichtung nach Anspruch 1 gelöst. In den Unteransprüchen sind Weiterbildungen der Vorrichtung nach Anspruch 1 angegeben.

Ein besonderer Vorteil der Erfindung ist, daß mit wenigen elektronischen Bauelementen eine Schaltung realisiert worden ist, die auf absolute Größen ansprechend, den Motor so ansteuert, daß dieser in stabilen Endstellungen anhält und selbst Nachlaufbewegungen des Motors und des Getriebes nicht dazu führen können, daß der Spiegel verstellt wird ("flattert"). Hierzu trägt der Übertragungsmechanismus der Vorrichtung gemäß der Erfindung mit bei, durch den Drehbewegungen des Motors in Schwenk- bzw. Kippbewegungen umgewandelt werden.

Die Vorrichtung gemäß der Erfindung spricht auf eine bestimmte Lichtmenge an Blendlicht an und bringt den Spiegel aus der Normalstellung (V) in die Abblendstellung (T), es sei denn, daß gleichzeitig eine bestimmte Lichtmenge an Umlicht vorhanden ist. Hierbei können geeignete Lichtmengen für das Ansprechen zugrundegelegt werden, ohne daß es auf das Verhältnis dieser Größen zueinander ankommt, wie dies bei bekannten Brückenschaltungen der Fall ist.

Ein Ausführungsbeispiel der Erfindung wird nachstehend an Hand der Zeichnungen erläutert. Es zeigt

Fig. 1 eine Schaltung für die Vorrichtung gemäß der Erfindung.

Fig. 2 einige Teile des Kippmechanismus für die Vorrichtung gemäß der Erfindung.

Fig. 3 eine Schnittansicht gemäß III-III in Fig. 2.

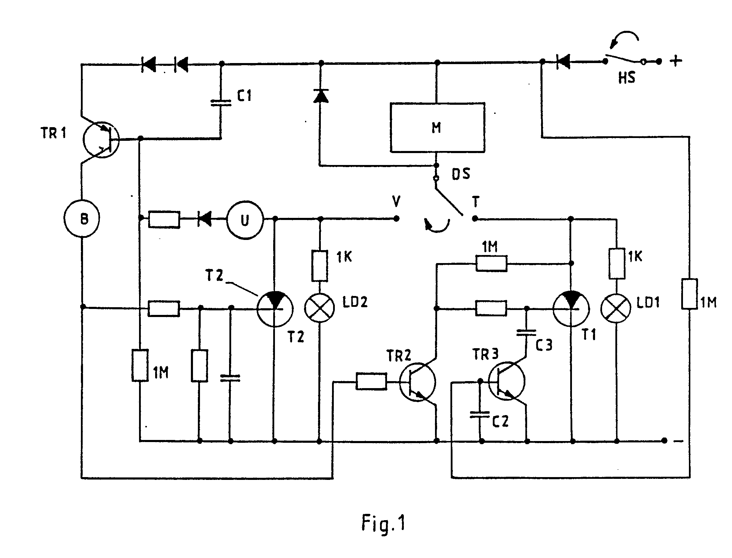

Fig. 1 zeigt eine Ausführungsform einer erfindungsgemäßen Schaltung.

Die Schaltung wird an den Pluspol und den Minuspol einer Gleichspannungsquelle gelegt, beispielsweise 12V Gleichspannung eines Kraftfahrzeuges. Über einen Hauptschalter HS kann die Schaltung ein- oder ausgeschaltet werden, so daß die Vorrichtung gemäß der Erfindung abgeschaltet werden kann, wenn eine automatische Verstellung des Spiegels vom Kraftfahrer nicht gewünscht wird. Eine dem Hauptschalter HS nachgeschaltete Diode sichert die Schaltung gegenüber einem Vertauschen der Anschlüsse.

Mit M ist ein Gleichspannungsmotor bezeichnet, der über ein Getriebe auf den Verstellmechanismus für den Spiegel einwirkt. Andere Antriebsmöglichkeiten können anstelle eines Umdrehungsmotors eingesetzt werden. Bedeutsam ist, daß auf dem Ausgangsteil, hier der Ausgangswelle, ein Drehschalter DS angeordnet ist, der zwei Stellungen, T und V, hat. Für den vorliegenden Zweck einsatzfähig ist ein bipolarer Schalter, d.h. ein Schalter, der beim Umschalten keine elektrische Verbindung zwischen den beiden Kontaktstücken T und V herstellt. Da der Drehschalter DS und auch der Verschwenkmechanismus auf der Welle des Motors angeordnet sind, entspricht die eine Schalterstellung, nämlich T, derjenigen Stellung des Spiegels, in der auf den Spiegel fallendes Licht nur zum Teil reflektiert wird. Es handelt sich also um die sog. Abblendstellung des Rückblickspiegels. Die mit V bezeichnete Stellung des Schalters DS entspricht der Normalstellung des Spiegels, d.h. auf ihn fallendes Licht wird voll reflektiert.

In der Schaltung ist zu erkennen, daß für den Motor M zwei Stromwege zur Verfügung stehen, die den Motor aus der einen Stellung in die andere Stellung treiben, so ist der Stellung T ein Thyristor T1 und der Stellung V ein Thyristor T2 zugeordnet. Fließt also ein Strom aus der Spannungsquelle über den Motor und den Schalter DS in dessen Stellung T und über den Thyristor T1, so wird der Motor M in Drehung gesetzt, er nimmt den Schaltteil des Drehschalters DS mit und unterbricht somit den Stromfluß über den Motor M. In entsprechender Weise sorgt der Thyristor T2 dafür, den Motor so zu drehen, daß der Drehschalter DS aus der Stellung V in die Stellung T gelangt.

Der Thyristor T1 wird über einen Transistor TR2 angesteuert, der über einen Widerstand (1mΩ) mit dessen Anode und einen anderen Widerstand mit dessen Gate verbunden ist. Weiterhin ist über einen Kondensator C3 ein Transistor TR3 an das Gate des Thyristors T1 geschaltet. Die Basis des Transistors TR3 ist über einen Kondensator C2 an den negativen Pol der Spannungsquelle gelegt.

Das Gate des Thyristors T2 ist über einen Transistor TR1 triggerbar. Die Basis des Transistors TR1 ist über einen Kondensator C1 mit dem positiven Pol der Spannungsquelle verbunden. Weiterhin sind zwei hintereinander geschaltete Dioden vorgesehen, die parallel zum Kondensator C1 mit dem Emitter des Transistors TR1 verbunden sind.

Der Transistor TR1 ist ein pnp-Transistor, während die Transistoren TR2 und TR3 npn-Transistoren sind. Die Kondensatoren C1 und C2 haben eine Kapazität von etwas 10µF, der Kondensator C3 35µF.

Leuchtdioden LD1 und LD2 zeigen die Leitungszustände der Thyristoren T1 und T2 an.

In der Schaltung sind zwei mit U und B bezeichnete Elemente vorhanden. Es kann sich hierbei um Dioden handeln, die bei Lichteinfall leitend werden. Es kann sich auch um sog. Photowiderstände handeln, deren Widerstand sich bei Lichteinfall auf einen niedrigen Wert herabsetzt.

Bei dem mit B bezeichneten Element handelt es sich um dasjenige Element, welches auf Blendlicht anspricht, beispielsweise wenn ein Kraftfahrzeug von hinten her zu nah auffährt und/oder die Scheinwerfer aufgeblendet hat.

Das mit U bezeichnete Element spricht auf Umlicht an. Es handelt sich hierbei um Licht, das von der Seite her in das Auto einfällt, beispielsweise durch Vorbeifahren an einer Straßenlaterne, durch Entzünden eines Feuerzeuges oder aber auch durch Tageslicht.

Insgesamt erweist sich bei Betrachtung der Schaltung, daß es sich hierbei um eine logische Auswertschaltung handelt, die den Motor und damit auch den Drehschalter DS dann nur in die Stellung T bringt, wenn Licht auf die Diode B fällt, jedoch kein Licht auf die Diode U fällt, d.h. wenn der Kraftfahrer bei Nachtfahrt von einem nachfolgenden Kraftfahrzeug geblendet wird. Unter allen anderen Bedingungen des Lichteinfalls auf die Dioden U und B soll die Schaltung den Motor und den Drehschalter DS in die Stellung V bringen oder dort belassen, d.h. der Spiegel ist in seiner Normalstellung, so daß das einfallende Licht voll reflektiert wird.

Nachfolgend werden einige Betriebszustände anhand der Schaltung erläutert.

Ausgehend von dem in Fig. 1 gezeigten Zustand, d.h. der Schalter DS befindet sich in der Stellung T, in der der Spiegel einfallendes Licht nur zum Teil reflektiert.

In diesem Betriebszustand ist der Thyristor T2 durchgeschaltet, der Thyristor T1 nicht, so daß nur die Leuchtdiode LD1 leuchtet. Im durchgeschalteten Zustand des Thyristors T2 ist dessen Gate auf einem hohem positiven Potential, so daß über die entsprechende Verbindung auch die Basis des Transistors TR2 auf hohem Potential liegt, d.h. der Transistor TR2 ist leitend. Bei leitendem Transistor TR2 ist das Gate des Thyristors T1 auf negativem Potential, d.h. er kann nicht zünden.

Fällt nun kein Licht auf die Photodiode B, d.h. der Kraftfahrer wird nicht durch ein nachfolgendes Kraftfahrzeug geblendet, so sperrt die Photodiode B, und die Basis des Transistors TR2 fällt auf ein niedriges Potential, so daß der Transistor TR2 nichtleitend wird. Dann aber kann das Gate des Thyristors T1 über die eingezeichneten Widerstände auf ein hohes Potential gehen, so daß der Thyristor T1 zündet. Die Diode LD1 erlischt und der Motor M erhält über den Drehschalter DS Strom aus der Spannungsquelle. Dadurch wird der Drehschalter DS aus der gezeigten Stellung in die Schaltstellung V gebracht, d.h. der Strom über den Motor M wird abgeschaltet. In Stellung V des Drehschalters DS befindet sich der Spiegel in Normalstellung.

Fällt in der Normalstellung des Spiegels Umlicht auf die Photodiode U, so schaltet diese durch, so daß die Basis des Transistors TR1 auf ein hohes Potential geht. In diesem Zustand kann jedoch der pnp-Transistor TR1 nicht durchschalten. Demzufolge ist das Gate des Thyristors T2 auf einem niedrigen Potential, so daß der Thyristor T2 nicht zünden kann.

Fällt nun Licht auf die Photodiode B, so schaltet diese durch. Der Transistor TR1 aber kann nicht durchschalten, so daß wiederum der Thyristor T2 nicht zünden kann und letztendlich der Motor keinen Strom bekommt, so daß der Spiegel in der Normalstellung V verbleibt.

Ein besonderer Vorteil der Schaltung der Vorrichtung gemäß der Erfindung liegt in der Art und Weise, in welcher der zuvor leitende Thyristor abgeschaltet wird. Dies ist darauf zurückzuführen, daß sich die Thyristoren T1 und T2 in einem Stromkreis befinden, der durch den Drehschalter DS unterbrochen wird. D.h. der zuvor leitende Transistor wird durch Unterbrechung der Verbindung seiner Anode zur Spannungsquelle über den Schalter DS von der Spannungsquelle abgetrennt und dadurch wird der Thyristor zwangsweise abgeschaltet.

Nachfolgend wird der Sonderfall betrachtet, der dann eintritt, wenn das Kraftfahrzeug angehalten und die Schaltung abgeschaltet, wird, wobei sich der Spiegel in der Stellung T befand. Wird das Kraftfahrzeug danach wieder bei Tageslicht gestartet, so muß sichergestellt werden, daß der Spiegel unmittelbar nach dem Starten in die Stellung V gelangt.

D.h. unmittelbar nach dem Einschalten der Schaltung befindet sich der Schalter DS in der Stellung T. Die Photodiode U ist durchgeschaltet, da sie Umlicht erhält, eine Verbindung zum Pluspol der Spannungsquelle besteht jedoch nicht, da der Schalter DS in der Stellung T ist. Die Photodiode B ist ebenfalls leitend, weil Tageslicht einfällt. Entsprechend ist das Gate des Thyristors T1 hoch, der Thyristor T1 kann nicht zünden.

Mit dem Einlegen des Schalters HS wird der Kondensator C1 über den Widerstand (1MΩ) aufgeladen. Dadurch wird die Basis des Transistors TR1 auf ein hohes Potential gebracht, so daß der Transistor TR1 öffnet. Dadurch kann der untere Anschluß der Photodiode B auf ein niedriges Potential abfallen, so daß der Transistor TR2 öffnet und das Gate des Thyristors T1 auf ein positives Potential gelangt. Dadurch kann der Thyristor T1 zünden, den Motor speisen und den Drehschalter DS in die Stellung V bringen.

In dieser Stellung kann der Thyristor T2 nicht zünden, weil die Photodiode U Licht erhält und daher durchgeschaltet hat, wenngleich der Schalter DS sich in der Stellung V befindet. Dies liegt daran, daß die Basis des Transistors TR1 auf hohem Potential liegt, so daß der Transistor TR1 offen ist. Dadurch ist das Gate vom Thyristor T2 auf einem hohen Potential, d.h. der Thyristor T2 kann nicht zünden, der Motor kann nicht laufen und der Schalter DS bleibt in der Stellung V .

Ausgehend von der in Fig. 1 gezeigten Stellung, bei der Blendlicht auf den Spiegel fällt, wird der Fall betrachtet, wenn dieses Blendlicht wegfällt. Der Spiegel soll nämlich nicht abrupt in die Normalstellung zurückgehen, sondern dies soll mit einer Verzögerung in der Größenordung von ca. 1 Sekunde durchgeführt werden, was die Schaltung wie folgt erreicht. ( Zur Einstellung dieser Zeitspanne kann ein Stellteil, z.B. Potentiometer, vorgesehen sein, so daß eine individuelle Verstellung auf kürzere oder längere Zeiten möglich ist). Damit der Thyristor T1 zünden kann, muß zunächst einmal der Kondensator C3 aufgeladen sein. Über den leitenden Transistor TR2 liegt der Kondensator C3 an Spannung. Nach der Aufladung des Kondensators C3, und zwar bei Erreichen der Zündspannung am Gate vom Thyristor T1, wird dieser leitend und bringt den Motor und damit den Schalter DS in die Stellung V.

Gleichzeitig mit dem Laden des Kondensators C2 wird der Kondensator C1 nach dem Einlegen des Schalters HS aufgeladen. Hat C2 eine genügend große Spannung erreicht, so schaltet der Transistor TR3 durch, wodurch die Rücklaufverzögerung über die Aufladung des Kondensators C3 wirksam gemacht wird. Ist nämlich der Transistor TR3 nicht durchgeschaltet, so kann der Kondensator C3 nicht aufgeladen werden.

Durch die Erfindung ist auch sichergestellt, daß nur bei längerzeitiger Störung der Spiegel gekippt wird. Erhält die Fotodiode B nur kurzzeitig einen starken Lichteinfall, dann schaltet zwar der Thyristor T2 durch, der Transistor TR2 hat jedoch noch nicht umgeschaltet, weil das Gate des Thyristors T2 über einen zusätzlichen Widerstand mit der Basis des Transistors TR2 verbunden ist.

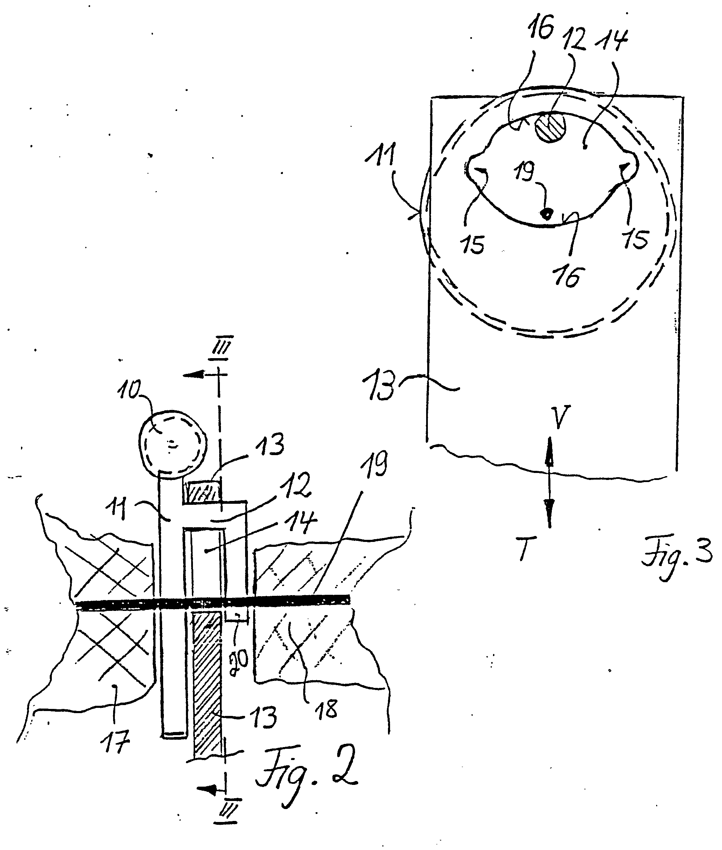

In Fig. 2 und 3 sind einige wesentliche Teile der Kippelemente für die Vorrichtung gemäß der Erfindung gezeigt, es handelt sich hierbei nicht um eine vollständige Konstruktionszeichnung, sondern lediglich um die Wiedergabe einiger Teile, um die Wirkungsweise der Kippelemente gemäß der Erfindung erläutern zu können.

Der in Fig. 10 nicht gezeigte Motor ist mit einer Ausgangswelle versehen, auf welcher eine Schnecke 10 angeordnet ist. Die Schnecke 10 kämmt mit einer Schneckenradverzahnung, die am Außenumfang einer Kurbelscheibe 11 angebracht ist. Die Kurbelscheibe 11 ist auf einer Welle 19 befestigt, welche ihrerseits in Lagern 17 und 18 gelagert ist.

Außerhalb des Mittelpunktes der Kurbelscheibe 11 ist ein Kurbelzapfen 12 vorgesehen, der in axialer Richtung nach außen vorsteht und an seinem freien Ende mit einem radial gerichteten Halterungsteil 20 ausgebildet ist. Der Halterungsteil 20 ist ebenfalls auf der Welle 19 befestigt. Im Zwischenraum zwischen der Kurbelscheibe 11 und dem Halterungsteil 20 ist ein Lenker 13 angeordnet, der, wie in Fig. 3 durch den Doppelpfeil gezeigt, hin- und hergehende Bewegungen ausführen kann. Die zugehörigen Führungen und Lagerungen sind nicht gezeigt. Ebenso ist nicht die Verbindung des Lenkers 13 mit dem Spiegel gezeigt. Es sei hier nur hervorgehoben, daß durch die hin- und hergehende Bewegung des Lenkers 13 der Spiegel Schwenkbewegungen zwischen seinen beiden Stellungen V und T, der Normalstellung bzw. der vollreflektierenden Stellung und der abgeblendeten Stellung bzw. der teilreflektierenden Stellung, durchführen kann.

Der Lenker 13 ist mit einer im wesentlichen ellipsenförmigen Öffnung 14 ausgebildet, in der sich der Kurbelzapfen 12 drehend bewegen kann. Die Öffnung 14 ist mit Bereichen 15 größerer Radialerstreckung und Bereichen 16 kleiner Radialerstreckung ausgebildet. In den Bereichen 15 kann jeweils auch eine teilkreisförmige Ausbuchtung mit einem Radius vorgesehen sein, der etwas größer als der Durchmesser des Kurbelzapfens 12 ist.

In den in Fig. 2 und 3 gezeigten Stellungen befindet sich der Kurbelzapfen 12 in dem oberen Bereich 16, dies entspricht der Stellung V des Spiegels.

In den Figuren ist nicht der Drehschalter DS gezeigt, der an der Kurbelscheibe 11 befestigt ist, und zwar so, daß er seine Schaltfunktionen durchführt, wenn sich der Kurbelzapfen den Bereichen 15 größerer Radialerstreckungen befindet.

Bei Drehung des Motors wird die Schnecke 10 und die Kurbelscheibe 11 in Drehung versetzt. Dadurch findet zunächst eine relativ geringe Bewegung des Lenkers 13 statt. Gelangt der Kurbelzapfen 12 in den Bereich 15 hinein, so führt der Schalter seinen Schaltvorgang durch und schaltet den Stromzufluß zum Motor M ab. Der Motor führt eine weitergehende Bewegung durch, so daß der Kurbelzapfen 12 in den Bereich 16 des Lenkers 13 gelangt. Dadurch ist der Lenker 13 bei Betrachtung von Fig. 3 in seine untere Lage verschoben worden, und in dieser Lage befindet sich der Spiegel 14 der halbreflektierenden Stellung.

Es ist ersichtlich, daß durch geringe Bewegungen des Kurbelzapfens 12, auf welche Ursache diese Bewegungen auch immer zurückzuführen sein mögen, kaum Hin- und Herbewegungen des Lenkers 13 erzeugt werden können. Dadurch bleibt die Lage des Spiegels unverändert, selbst wenn Schwingungen auf den Mechanismus übertragen werden sollten. Dies führt zu einer relativ stabilen Halterung des Spiegels in seinen beiden Endlagen.

Die Endstellungen des Spiegels können auch über mechanische oder elektronische Mittel individuell verändert werden.

Bei der Betrachtung von Fig. 2 wird ersichtlich, daß die Kurbelscheibe 11 in unmittelbarer axialer Begrenzung durch die Lager 17 und 18 und die Welle 19 gelagert ist. Das Heranbringen der Lager an die Kurbelscheibe 11 führt dazu, daß die Kurbelscheibe 11 und auch der Kurbelzapfen 12 keine Kippbewegungen durchführen können. Bei bekannten Kippmechanismen ist der der Kurbelscheibe 11 entsprechende Teil nur einseitig gelagert, was dazu führt, daß der Kippmechanismus relativ wackelig ist und daß diese störenden Bewegungen auch auf den Spiegel übertragen werden können.

Mit der erfindungsgemäßen Vorrichtung können Innenspiegel und Außenspiegel selbsttätig verstellt werden.

## Ansprüche

1. Vorrichtung zum Verschwenken eines Kraftfahrzeugspiegels aus der Normalstellung (vollreflektierender Zustand V) in eine Abblendstellung (teilreflektierender Zustand T) bei übermäßigem Blendlicht (B) durch die Scheinwerfer eines nachfolgenden Fahrzeuges und unter Berücksichtigung von störendem Umlicht (U), aufweisend eine Spannungsquelle, einen Motor (M), dessen Welle (10) über einen Kippmechanismus auf den Spiegel einwirkt und der über Thyristoren (T1 und T2) gespeist ist, die ihrerseits über Transistoren (TR1, TR2 und TR3) mit Hilfe von Photodioden bzw. -widerstände (B und U) für Blendlicht und störendes Umlicht gesteuert sind, dadurch gekennzeichnet, daß ein bipolarer Drehschalter (DS) zum Motor (M) in Reihe geschaltet ist, der den Stromfluß durch den Motor nach einem bestimmten Drehwinkelschritt seiner Welle unterbricht, den zuvor leitenden Thyristor (T1 bzw. T2) von der Spannungsquelle abtrennt und ihn abschaltet, und daß der Kippmechanismus aufweist: eine vom Motor (M) angetriebene Kurbelscheibe (11) mit einem Kurbelzapfen (12) und einen mittels des Kurbelzapfens (12) hin- und herbewegbaren Lenker (13), der mit dem Spiegel verbunden und mit einer im wesentlichen ellipsenförmigen, den Kurbelzapfen (12) umgebenden Öffnung (14) ausgebildet ist, deren Bereiche (15) größerer Radialerstreckung dem Schaltbereich des Drehschalters (DS) und deren Bereiche (16) kleinerer Radialerstreckung der Normal- und der Abblendstellung (V und T) des Spiegels zugeordnet sind.

2. Vorrichtung nach Anspruch 1, dadurch gekennzeichnet, daß parallel zur Gate-Kathoden-Strecke des den Motor (M) in die Normalstellung (V) des Spiegels treibenden Thyristors (T1) ein Kondensator (C3) und ein npn-Transistor (TR3) geschaltet ist, dessen Basis über einen weiteren Kondensator (C2) mit der Kathode dieses Thyristors (T1) verbunden ist.

3. Vorrichtung nach Anspruch 2, dadurch gekennzeichnet, daß in Reihe zum Transistor (TR1), der den den Spiegel in Abblendstellung (T) bringenden Thyristor (T2) ansteuert, eine Parallelschaltung aus zwei Dioden (LD1 und LD2) einerseits und einem Kondensator (C1) andererseits vorgesehen ist.

4. Vorrichtung nach Anspruch 3, dadurch gekennzeichnet, daß zwischen der Basis dieses Transistors (TR1) und dem Drehschalter (DS) in seiner Normalstellung (V) das auf das störende Umlicht (U) ansprechende Element (Photodiode oder Photowiderstand) - bzw. bei mehreren räumlich verteilten Elementen - diese Elemente (U) geschaltet sind.

5. Vorrichtung nach Anspruch 4, dadurch gekennzeichnet, daß das auf Umlicht ansprechende Element (U) über den Drehschalter (DS) an den positiven Pol der Spannungsquelle geschaltet ist.

6. Vorrichtung nach Anspruch 2, dadurch gekennzeichnet, daß in unmittelbarer Nähe zur Kurbelscheibe (11) bzw. der Kurbel (13) Lager (17 und 18) vorgesehen sind.

Fig.1

*Fig. 3*

*Fig. 2*

**Europäisches Patentamt**

**EUROPÄISCHER RECHERCHENBERICHT**

Nummer der Anmeldung

EP 88 11 3039

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-U-8 518 058 (STEWART)<br>* Seite 8, Zeile 28 - Seite 9, Zeile 21; Figuren 1,2,7-12 *<br>--- | 1 | B 60 R 1/08 |
| A | EP-A-0 067 335 (GENTEX CORP.)<br>* Ansprüche 8-14; Figuren 12-14 *<br>--- | 1 | |
| A | GB-A-2 156 545 (GENTEX CORP.)<br>* Ansprüche 11,16; Figuren 1,2 *<br>--- | 1 | |
| A | GB-A-1 422 411 (BALDWIN CO.)<br>* Anspruch 7; Figuren 1-8 *<br>----- | 1 | |

RECHERCHIERTE SACHGEBIETE (Int. Cl.4)

B 60 R

Der vorliegende Recherchenbericht wurde für alle Patentansprüche erstellt

| Recherchenort | Abschlußdatum der Recherche | Prüfer |
|---|---|---|
| DEN HAAG | 27-10-1988 | MAUSSER,T. |